Europäisches Patentamt

European Patent Office

Office européen des brevets

(19)

(11) Publication number: **0 029 289**
**B1**

(12) **EUROPEAN PATENT SPECIFICATION**

(45) Date of publication of patent specification: **14.09.83**

(51) Int. Cl.³: **B 60 G 15/06**

(21) Application number: **80303367.9**

(22) Date of filing: **25.09.80**

(54) Suspension strut assemblies.

(30) Priority: **16.11.79 US 94691**

(43) Date of publication of application:
**27.05.81 Bulletin 81/21**

(45) Publication of the grant of the patent:
**14.09.83 Bulletin 83/37**

(84) Designated Contracting States:
**DE GB IT**

(56) References cited:
**DE - A - 1 575 184**
**DE - A - 1 630 004**
**DE - A - 2 937 212**
**GB - A - 1 037 760**

(73) Proprietor: **GENERAL MOTORS CORPORATION**
**General Motors Building 3044 West Grand**
**Boulevard**
**Detroit Michigan 48202 (US)**

(72) Inventor: **Horvath, Richard Allan**
**308 Ashwood Avenue**
**Dayton, Ohio 45405 (US)**

(74) Representative: **Breakwell, John Neil Bower et al,**
**GM Patent Section-     Luton Office (F6) P O Box**
**No. 3 Kimpton Road**
**Luton Beds LU2 OSY (GB)**

Courier Press, Leamington Spa, England

Suspension strut assemblies

This invention relates to a suspension strut assembly for a vehicle suspension, in which an elongated outer tube forming a supporting part of the vehicle suspension has a closed lower end and an open upper end, removable components of a reservoir-type telescopic shock absorber are accommodated within the outer tube and include an elongated cylinder tube having a reciprocable piston rod projecting therefrom through a rod guide, and through an associated rod seal and seal cover, at the upper end of the cylinder tube, and connecting means provides a connection between the seal cover and the outer tube, for example as disclosed in GB—A—1 037 760 (Adam Opel AG).

Prior vehicle suspension strut assemblies of this kind have been of a "cartridge build" type of construction, involving a special shock absorber (telescopic damper) cartridge mounted within the outer support tube of the strut and replaceable by a new cartridge if required.

Generally, such cartridges are in the form of a unit having an outer envelope provided by a reservoir tube in which there is mounted a cylinder tube containing a hydraulic shock absorber fluid. The space between the reservoir tube and cylinder tube forms a reservoir for shock absorber fluid, communicating with the interior of the cylinder tube by way of a base valve mounted in the lower end of the cylinder tube. Slidably mounted within the cylinder tube there is a valved piston having a piston rod which extends outwardly therefrom through a piston rod guide supported within the upper end of the cylinder tube. These "cartridge build" units, in the form as originally provided, have a screw-on upper cap which constitutes a service nut, and is tightened to a set torque within the end of the support tube to firmly hold the shock absorber cartridge in place. For cartridge replacement, the service nut is threaded outwardly from the support tube and removed, to permit withdrawal of the original shock absorber cartridge from the support tube. Subsequently, a new cartridge can be inserted into the support tube, with the service nut being subsequently rethreaded therein to secure the replacement cartridge in place in the support tube.

These prior "cartridge build" struts have provided important benefits, but the service nut represents a relatively expensive item of original equipment, and the use of threaded components in the initial build can affect production efficiency due to the need for careful assembly to prevent cross-threading, and the need for tightening to a set torque to secure the cartridge in place.

The present invention is concerned with the problem of avoiding the need for a shock absorber cartridge, or threaded components such as a service nut, in the original strut assembly, but including provision for the use of a shock absorber cartridge for the purpose of service replacement.

For solving this problem, a suspension strut assembly in accordance with the present invention is characterised in that the connecting means provides a permanent connection between the seal cover and the outer tube, and that external guide means is formed on the outer tube adjacent to and below the connecting means to provide a cut line whereby the outer tube can be circumferentially cut by means of a cutting tool to divide the outer tube into two parts so that one part including the seal cover can be separated from the other part to facilitate removal of shock absorber components from within the said other part to thereby make the interior of the outer tube free for the installation therein of a shock absorber service cartridge incorporating a fluid reservoir, with retention of the said service cartridge within the outer tube by a service nut in threaded engagement with a helically threaded section formed on a wall portion of the said other part of the outer tube in the vicinity of the guide means.

A specific form of suspension strut assembly in accordance with the present invention utilises a seal cover welded to the end of the outer support tube in place of the threaded service nut to provide for high efficiency production and effective cost reduction, and it also includes provision for peripheral cutting and severing of the upper portion of the support tube to allow removal of the welded seal cover and cut-off top of the support tube to provide access for removal of the worn shock absorber components from the support tube and replacement by a shock absorber cartridge unit, with a screw-on type cover constituted by a service nut thereupon being threaded into the upper end of the support tube to maintain the cartridge unit in its operating condition. By such servicing, the initial "wet build" strut assembly is converted into a "cartridge build" unit.

In the accompanying drawings:

FIG. 1 is a side elevational view of a welded "wet build" suspension strut assembly fabricated in accordance with the present invention;

FIG. 2 is a side elevational view of the suspension strut assembly of FIG. 1 with the top of a strut support tube cut away and with internal shock absorber components being removed from the tube;

FIG. 3 is a view similar to the view of FIG. 2 illustrating a replacement shock absorber cartridge being inserted into the strut support tube and with a screw-in type service nut aligned for threaded engagement within the support tube;

FIG. 4 is an enlarged fragmentary view partially in section, illustrating details of the upper portion of the strut of FIG. 1; and

FIG. 5 is an enlarged view partially in section of the "cartridge build" unit of FIG. 3 fully assembled in place and ready for operation.

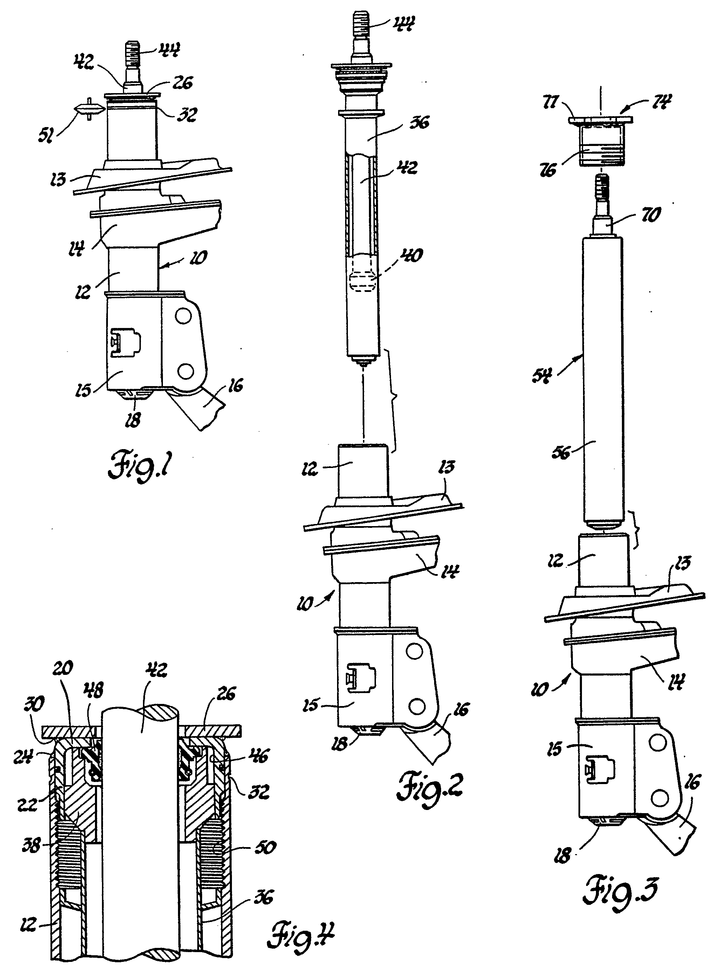

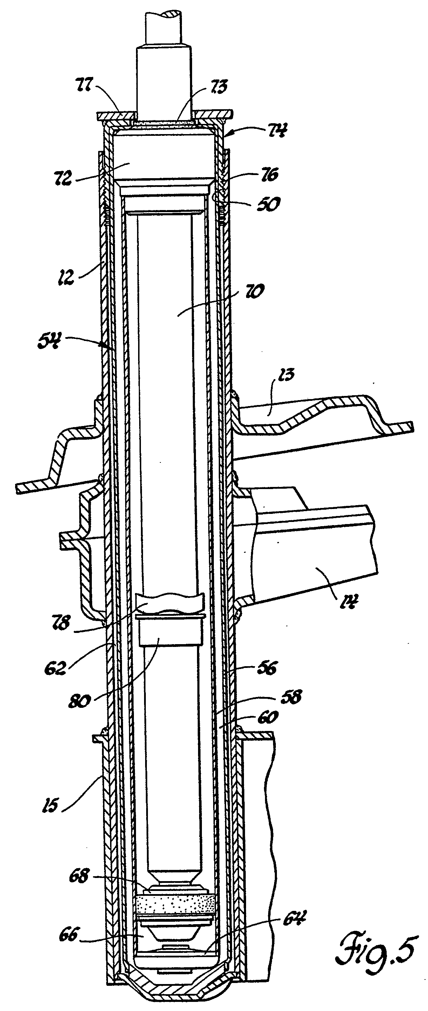

In the drawings, there is shown in FIGS 1, 2 and 4 a MacPherson type suspension strut 10 having an outer cylindrical support tube 12 on which is mounted a suspension spring seat 13 and a steering arm 14. The lower end of the support tube 12 is mounted within the sleeve of a mounting bracket 15, and this bracket is operatively connected to a steering knuckle of a road wheel assembly, a portion of which is illustrated at 16. The support tube 12 is closed at its lower end by a cap 18, and extends upwardly from the cap 18 through the mounting bracket 15 to an upper end which is closed by a seal cover 20. The seal cover 20 has a cylindrical wall 22 that extends downwardly into the end of the support tube 12 and is fastened to the support tube by an annular weld 24. A flat bumper plate 26 is seated on the top of the seal cover 20 and is secured thereto by welds 30 (or other fastening could be used). An annular groove (cut line) 32 is formed in the support tube 12 just below the weld 24 so that the support tube can be cut along this line by an appropriate tool to permit removal of the seal cover and the attached top portion of the support tube. The removal of these components from the support tube provides access permitting removal of the shock absorber components mounted therein.

The suspension strut 10 is illustrated as a "wet build" unit in which the support tube 12 provides the reservoir tube for confining a portion of the hydraulic shock absorber fluid and serves as a suspension load-bearing member. Operatively mounted within the support tube is an elongated cylinder tube 36 which extends upwardly from a base valve seated on the lower end cap into engagement with a cylindrical rod guide 38 disposed in the upper end of the support tube adjacent the seal cover 22.

A valved piston 40 is mounted for reciprocatory sliding movement within the cylinder tube 36. A piston rod 42 secured to the piston 40 extends upwardly therefrom and axially through the cylinder tube 36, the rod guide 38, the seal cover 20 and the bumper plate 26. The upper end 44 of this piston rod is threaded for attachment to the body of a vehicle by way of an upper mounting (not shown). Disposed beneath the seal cover 20 and in a recess 46 formed in the upper end of the rod guide is an annular seal 48. This seal is sealingly engaged with the periphery of the piston rod 42 and prevents shock absorber fluid from leaking from the upper end of the support tube 12.

With the strut and shock absorber components mounted therein, operatively disposed between the sprung and unsprung parts of the vehicle, ride motions will be effectively damped by the piston as it strokes within the cylinder tube, in known manner. A shock absorber generally has a long service life; nevertheless, replacement of the entire strut or the shock absorber component therein is sometimes required.

To facilitate service of the strut 10, the wall of the support tube is internally threaded at 50 adjacent the upper end thereof and below the lower end of the wall of the seal cover, as will be hereinafter described.

Thereby, if the shock absorber components of the strut leak or become weak or noisy and replacement is desired, a tube cutter such as cutting wheel 51 can be employed to cut through the support tube 12, using the annular groove 32 as a guide. After the support tube 12 has been completely cut through at the annular groove 32, the upper top portion of the strut can be removed, together with the shock absorber components including the cylinder tube 36, the rod guide 38, the piston 40 and the piston rod 42, as illustrated in FIG. 2. After removal of these shock absorber components, the shock absorber fluid is evacuated from the support tube, leaving a film of oil therein as a protective coating. The support tube is slightly reduced in length as a result of the removal of the top portion of the tube extending above the groove 32.

FIG. 3 illustrates the insertion of a shock absorber service cartridge 54 into the support tube 12 to replace the used shock absorber components previously removed. The service cartridge 54 is a self-contained shock absorber unit, the details of which are best shown in FIG. 5. This cartridge comprises an outer reservoir tube 56 which co-operates with an inner cylinder tube 58 to form a reservoir 60 for the shock absorber fluid of this unit. The outer chamber 62 formed between the reservoir tube and the support tube 12 contains air, whereas in the "wet build" unit this space is used as a reservoir for the hydraulic shock absorber fluid. Disposed at the lower end of the cylinder tube is a base valve assembly 64 for metering the flow of hydraulic shock absorber fluid between the reservoir 60 and a compression chamber 66 formed between the valved piston 68 and the base valve assembly 64. A piston rod 70 extends axially upwardly through the cylinder tube 58, a rod guide 72 and a seal 73 which are mounted at the upper end of the cartridge. To secure the cartridge 54 in place, a service nut 74 is employed having a cylindrical side wall 76 externally threaded to mate with the internal threads 50 of the support tube 12. To facilitate turning of the service nut 74 relative to the support tube 12 for threading these components into the FIG 5 position, the service nut is formed with an external polygonal head 77 to accommodate a corresponding tool for turning the nut. A polymeric cushion 78 surrounds the piston rod 70 and is supported by a collar 80 fixed to the piston rod: this cushion 78 is adapted to contact the bottom of the rod guide 72 on predetermined outward (extension) movement of the piston rod from the cylinder tube 58, to limit the extent of piston rod travel.

The strut after rebuild is a cartridge build unit which structurally and functionally is virtually equivalent to the wet build strut. With this invention, a wet build unit is initially provided since it is simpler in construction and easier to build, and additionally, being a welded unit, there is no threading required on initial assembly, and correspondingly no requirement for a nut to be torqued to a predetermined setting. Furthermore, there is no chance of cross-threading, and no chance of chips from the cross-threading entering the shock absorber support tube. Whenever the shock absorber component becomes worn to such an extent as to require replacement, or a shock absorber with different damping characteristics is desired, an appropriate service cartridge can readily be inserted to replace the original shock absorber. In contrast to the wet build unit, the service cartridge is a totally sealed unit, and, with the support tube being readily cut, this invention facilitates repair with simple tools.

**Claims**

1. A suspension strut assembly for a vehicle suspension, in which an elongated outer tube (12) forming a supporting part of the vehicle suspension has a closed lower end and an open upper end, removable components of a reservoir-type telescopic shock absorber are accommodated within the outer tube and include an elongated cylinder tube (36) having a reciprocable piston rod (42) projecting therefrom through a rod guide (38), and through an associated rod seal (48) and seal cover (20), at the upper end of the cylinder tube, and connecting means (24) provides a connection between the seal cover and the outer tube, characterised in that the connecting means (24) provides a permanent connection between the seal cover (20) and the outer tube (12), and that external guide means (32) is formed on the outer tube adjacent to and below the connecting means to provide a cut line whereby the outer tube can be circumferentially cut by means of a cutting tool (51) to divide the outer tube into two parts so that one part including the seal cover can be separated from the other part to facilitate removal of shock absorber components from within the said other part to thereby make the interior of the outer tube free for the installation therein of a shock absorber service cartridge (54) incorporating a fluid reservoir, with retention of the said service cartridge within the outer tube by a service nut (74) in threaded engagement with a helically threaded section (50) formed on a wall portion of the said other part of the outer tube in the vicinity of the guide means.

2. A suspension strut assembly according to claim 1, characterised in that the external guide means comprises an annular groove (32) formed on an outer wall portion of the outer tube (12).

3. A suspension strut assembly according to claim 1 or 2, characterised in that the connecting means providing a permanent connection between the seal cover (20) and the outer tube (12) comprises an annular weld (24).

4. A suspension strut assembly according to any one of claims 1 to 3, characterised in that the helically threaded section (50) is formed on an inner wall portion of the outer tube (12) and extends below the seal cover (20), and the external guide means (32) is disposed axially between the helically threaded section and the connecting means (24).

**Revendications**

1. Ensemble de jambe de suspension pour suspension de véhicule, dans lequel un tube extérieur allongé (12) formant un élément de support de la suspension du véhicule présente une extrémité inférieur fermée et une extrémité supérieure ouverte, des constituants amovibles d'un amortisseur télescopique du type réservoir étant logés dans le tube extérieur et comportant un tube cylindrique allongé (36) muni d'une tige de piston (42) pouvant effectuer des va-et-vient et qui fait saillie de celui-ci à travers un guide de tige (38), et à travers un joint de tige associé (48) et un couvercle étanche (20), à l'extrémité supérieure du tube cylindrique, cet ensemble comportant également un dispositif de liaison (24) assurant une liaison entre le couvercle étanche et le tube extérieur, caractérisé en ce que le dispositif de liaison (24) assure une liaison permanente entre le couvercle étanche (20) et le tube extérieur (12), et le dispositif de guidage extérieur (32) est formé sur le tube extérieur contigu au dispositif de liaison et situé au-dessous de celui-ci pour fournir une ligne de coupe selon laquelle le tube extérieur peut être coupé sur sa circonférence au moyen d'un outil de coupe (51) afin de diviser le tube extérieur en deux parties, de sorte qu'une partie comportant le couvercle étanche peut être séparée de l'autre partie pour faciliter l'enlèvement des constituants de l'amortisseur de l'intérieur de l'autre partie, pour rendre ainsi libre l'intérieur du tube extérieur en vue de l'installation dans celui-ci d'une cartouche de service (54) d'amortisseur incorporant un réservoir de fluide, avec maintien de ladite cartouche de service dans le tube extérieur par un écrou de service (74) vissé sur une section (50) filetée hélicoïdalement sur une portion de paroi de l'autre partie du tube extérieur au voisinage du dispositif de guidage.

2. Ensemble de jambe de suspension selon la revendication 1, caractérisé en ce que le dispositif de guidage extérieur comporte une gorge annulaire (32) ménagée sur une paroi extérieure du tube extérieur (12).

3. Ensemble de jambe de suspension selon l'une des revendications 1 et 2, caractérisé en ce que le dispositif de liaison assurant une liaison permanente entre le couvercle étanche (20) et le tube extérieur (2) comprend une soudure annulaire (24).

4. Ensemble de jambe de suspension selon l'une des revendications 1 à 3 caractérisé en ce que la section à filetage hélicoïdal (50) est formée sur une partie de la paroi intérieure du tube extérieur (12) et s'étend au-dessous du couvercle étanche (20), et le dispositif de guidage externe (32) est placé axialement entre la section à filetage hélicoïdal et le dispositif de liaison (24).

**Patentansprüche**

1. Federbeinaufbau für eine Fahrzeugaufhängung mit einem länglichen Außenrohr (12), das ein tragendes Bestandteil der Fahrzeugaufhängung bildet und ein geschlossenes unteres Ende und ein offenes oberes Ende aufweist, mit auswechselbaren Bestandteilen eines Teleskopstoßdämpfers vom Reservoirtyp, die im Innern des Außenrohres untergebracht sind und ein längliches zylinderförmiges Rohr (36) umfassen, sowie eine hin- und herbewegliche Kolbenstange (42), die durch eine Gestängeführung (38), eine entsprechende Gestängedichtung (48) und eine Dichtungsabschlußkappe (20) aus dem oberen Ende des zylinderförmigen Rohres herausragt, mit einer Verbindungsvorrichtung (24), welche die Dichtungsabschlußkappe (20) mit dem Außenrohr (12) verbindet, dadurch gekennzeichnet, daß die Verbindungsvorrichtung (24) eine dauerhafte Verbindung zwischen der Dichtungsabschlußkappe (20) und dem Außenrohr (12) gewährleistet, daß am Außenrohr unterhalb der Verbindungsvorrichtung und anschließend an diese eine außenliegende Führungsvorrichtung (32) ausgebildet ist, die als Schnittlinie dient, um das Außenrohr entlang seinem Umfang mit einem Schneidwerkzeug (51) durchzuschneiden, wodurch das Außenrohr so in zwei Teile teilbar ist, daß das eine, die Dichtkappe enthaltende Teil vom anderen Teil trennbar ist, um das Entnehmen der Stoßdämpferbauteile aus dem Innern dieses anderen Teils zu erleichtern, womit das Innere des Außenrohres für den Einbau eines mit einem Flüssigkeits-Reservoir versehenen Stroßdämpfer-Wartungseinsatzes (54) frei wird und wobei der Wartungseinsatz im Außenrohr durch einen Wartungs-Schraubenring (74) zurückgehalten wird, der mit einem mit einem schraubenförmigen Gewinde versehenen Abschnitt (50) verschraubt ist, der an einem Wandabschnitt des anderen Teils des Außenrohres benachbart zur Führungsvorrichtung ausgebildet ist.

2. Federbeinaufbau nach Anspruch 1, dadurch gekennzeichnet, daß die außenliegende Führungsvorrichtung eine ringförmige Nut (32) an einem Außenwandabschnitt des Außenrohres (12) umfaßt.

3. Federbeinaufbau nach Anspruch 1 oder 2, dadurch gekennzeichnet, daß die Verbindungsvorrichtung, die eine dauerhafte Verbindung zwischen der Dichtungsabschlußkappe (20) und dem Außenrohr (12) gewährleistet, eine ringförmige Schweißnaht (24) umfaßt.

4. Federbeinaufbau nach einem der Ansprüche 1 bis 3, dadurch gekennzeichnet, daß der mit einem schraubenförmigen Gewinde versehene Abschnitt (50) auf einem inneren Wandabschnitt des Außenrohres (12) ausgebildet ist und sich bis unter die Dichtungsabschlußkappe (20) erstreckt, und daß die außenliegende Führungsvorrichtung (32) axial zwischen dem mit einem schraubenförmigen Gewindeteil versehen Abschnitt und der Verbindungsvorrichtung (24) angeordnet ist.

0 029 289

Fig.1

Fig.2

Fig.3

Fig.4

Fig.5